# EUROPEAN PATENT APPLICATION

(11) **EP 1 386 823 A1**
(43) Date of publication of application: **04.02.2004**
(21) Application number: 03015811.7
(22) Date of filing: 10.07.2003
(51) Int. Cl.: B62D 5/06

(54) **Damping valve of steering system for vehicle**

(30) Priority: 29.07.2002 KR 2002044562
(71) Applicant: Mando Corporation, Pyungtaek-si, Kyunggi-do (KR)
(72) Inventor: Kim, Sang-Ryong, Wonju-si, Kangwon-do, Korea (KR)
(74) Representative: Urner, Peter, Dipl.-Phys.

(57) **Abstract**

The present invention relates to a damping valve of a steering system for a vehicle which is capable of improving a coupling structure of a housing assembly of a damping valve and a valve body for thereby implementing an easier fabrication and assembling operation. In a damping valve of a steering apparatus which includes a housing assembly (120) which is formed of a first housing (130) and a second housing (140) threadedly engaged with the first housing and is fixedly installed in one side of an oil pressure pipe, and a valve body (150) which is installed in the interior of the housing assembly, the first housing (130) includes an installation jaw portion (132) in which the valve body (150) is inserted and mounted, and a cocking portion (133) which is adapted to fix the valve body (150) inserted and mounted in the installation jaw portion (132).

## Description

### BACKGROUND OF THE INVENTION

### 1. Field of the Invention

The present invention relates to a damping valve of a steering system for a vehicle, and in particular to an improved damping valve of a steering system for a vehicle which is capable of improving a coupling structure of a housing assembly of a damping valve and a valve body for thereby implementing an easier fabrication and assembling operation.

### 2. Description of the Background Art

A conventional power assisted steering system includes a steering wheel that a driver performs a steering operation, a steering shaft provided in a lower portion of the steering wheel, a rotary valve connected to the steering shaft, and a gear box which is moved in an axial direction based on an oil pressure supplied through the rotary valve for thereby directly driving vehicle wheels. In particular, a cylinder is provided in the interior of the gear box, and a piston is provided therein. A rack bar which is extended in both directions of an outer portion of the gear box for thereby being driven in cooperation with the piston is installed in a center portion of the piston. In addition, an oil pressure pipe is connected between both sides of the cylinder divided into left and right sides by the piston and the rotary valve, so that when an oil pressure is supplied to the cylinder in one side through the rotary valve, on the contrary, an oil pressure is discharged through the oil pressure pipe in the other side of the cylinder. A damping valve is installed in the oil pressure pipe for thereby adjusting a flow path in accordance with a flowing direction of the oil pressure and absorbing a vibration transferred from the rack bar installed in the cylinder to a driver and a vibration of the oil pressure which is transferred to the rack bar, so that it is possible to enhance a steering feeling.

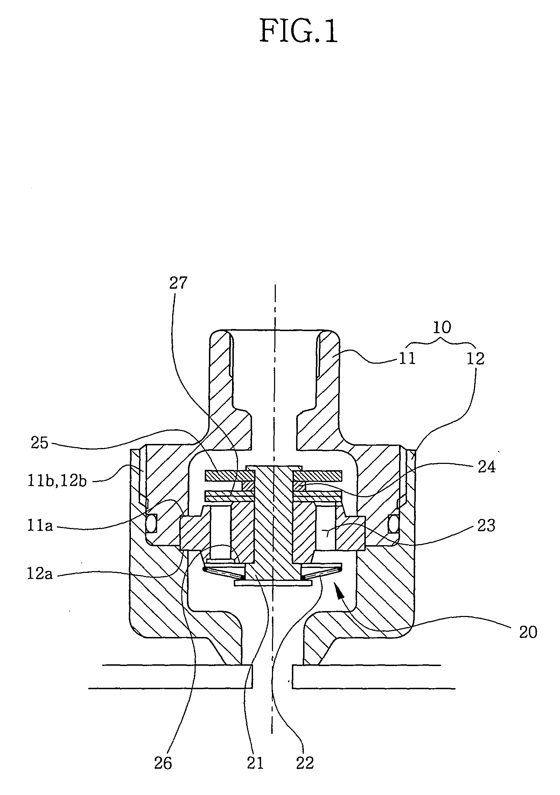

Figure 1 is a cross sectional view illustrating an example of the above damping valve. As shown therein, there is provided a housing assembly 10 which forms an outer shape of the damping valve. The housing assembly 10 is opened in an upward direction, and the interior of the same is hollow. In particular, the housing assembly 10 is divided into a first housing 11 and a second housing 12. A male thread 11b and a female thread 12b are formed in an outer surface of the first housing 11 and an inner surface of the second housing 12, respectively. Therefore, the first housing 11 is threadedly inserted into the second housing 12 for thereby implementing a thread coupling. In addition, a first jaw portion 11a and a second jaw portion 12a each having an extended diameter are formed in the portions opposite in an axial direction of the housings 11 and 12. A valve body 20 is installed between the first jaw portion 11 a and the second jaw portion 12a. In addition, a pin 21 passing through the valve body 20 is inserted into the center portion of the valve body 20. The pin 21 is elastically suspended by dint of a spring 22 installed in an outer side of the lower portion. In addition, a plurality of flow path holes 23 passing through the valve body 20 in the upward and downward directions are formed in an outer surface of the valve body 20. A retainer 24 and a washer 25 are installed in an outer side of the upper portion of the pin 21. A disk 27 which closely contacts with the upper side of the valve body by the spring which downwardly elastically supports the pin 21 is installed in the lower side of the washer 25. A valve 26 which closely contacts with a lower side of the valve body 20 by the spring 22 is installed in a lower side of the pin 21. As a part of each upper side and lower side of the valve body 20 which contacts with the disk 27 and the valve 26, respectively, is spaced apart from the disk 27 and the valve 26, the flow path holes 23 are always opened.

However, in the conventional damping valve, since there are provided the first and second jaw portions 11a and 12a accurately processed in order for the valve body 20 to be fixedly inserted into the separately formed first and second housings 11 and 12, much inconvenience occurs in a fabrication of the same. In addition, when assembling the valve body 20, since the first and second housings 11 and 12 having the first and second jaw portions 11 a and 12a are concurrently assembled, the assembling process is so complicated, and much inconvenience is caused. the separately formed first housing 11 and second housing 12 form the first and second jaw portions 11a and 12a which must be accurately processed in order for the valve body 20 to be fixedly inserted into the first and second housings 11 and 12, respectively

### SUMMARY OF THE INVENTION

Accordingly, it is an object of the present invention to provide a damping valve of a steering system for a vehicle that overcomes the problems encountered in the conventional art.

It is another object of the present invention to provide a damping valve of a steering system for a vehicle which is capable of improving a coupling structure of a housing of a damping valve and a valve body for thereby implementing an easier fabrication and assembling operation.

In order to achieve the above objects, in a damping valve of a steering apparatus which includes a housing assembly which is formed of a first housing and a second housing threadedly engaged with the first housing and is fixedly installed in one side of an oil pressure pipe, and a valve body which is installed in the interior of the housing assembly, there is provided a damping valve of a steering apparatus which comprises the first housing which includes an installation jaw portion in which the valve body is inserted and mounted, and a cocking portion which is adapted to fix the valve body inserted and mounted in the installation jaw portion.

In particular, the cocking portion is preferably formed in an entrance portion body of the installation jaw portion into which a valve is inserted.

### BRIEF DESCRIPTION OF THE DRAWINGS

The present invention will become better understood with reference to the accompanying drawings which are given only by way of illustration and thus are not limitative of the present invention, wherein;
Figure 1 is a cross sectional view illustrating a conventional damping valve;
Figure 2 is a front view illustrating a steering apparatus to which a damping valve according to the present invention is adapted; and
Figure 3 is a cross sectional view illustrating a damping valve according to the present invention.

### DETAILED DESCRIPTION OF THE PREFERRED EMBODIMENTS

The preferred embodiments of the present invention will be described with reference to the accompanying drawings.

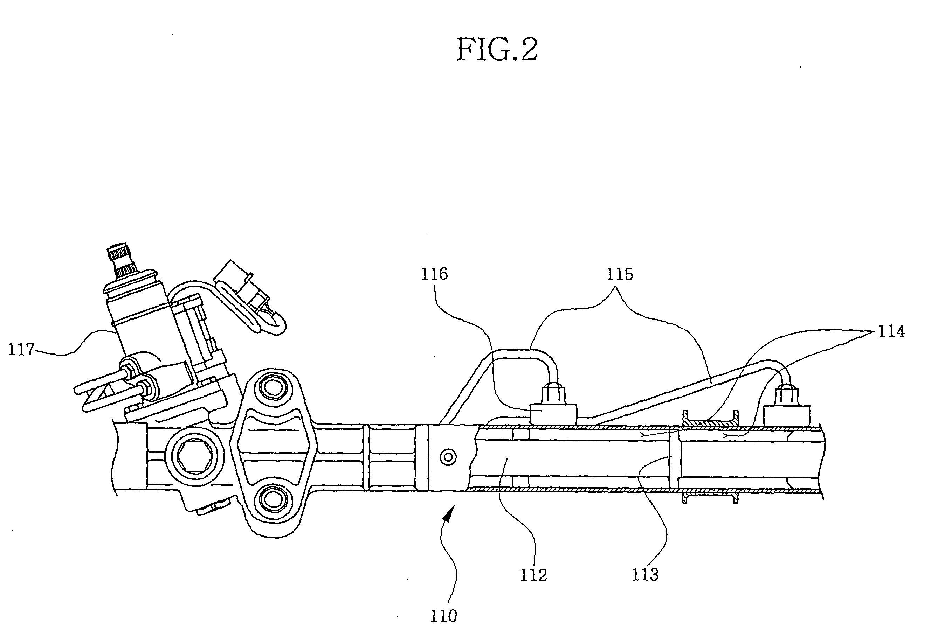

Figure 2 is a front view illustrating a steering apparatus to which a damping valve according to the present invention it adapted.

There are provided a rotary valve housing 117 to be crossed with a gear box 110 at a side portion of a long hollow gear box 110 and a rotary valve 111 located in the rotary valve housing 117. One side of the rotary valve 111 is connected with an oil pressure pump(not shown). In addition, a rack bar 112 is installed in the interior of the gear box 110. A piston 113 which closely contacts with an inner surface of the gear box 110 is installed in an intermediate portion of the rack bar 112, so that a cylinder 114 is located in the left and right sides of the piston 113. In addition, an oil pressure pipe 115 connected wit the rotary valve 111 is installed in an outer side of the cylinder 114. A damping valve 160 is installed in one end side end of the oil pressure pipe 115. The damping valve 160 is capable of adjusting the flow path in accordance with a flowing direction of a fluid which flows between the rotary valve 111 and the cylinder 114 for thereby absorbing a vibration transferred from the rack bar 112 installed in the cylinder 114 to the side of a driver and a vibration of an oil pressure transferred to the rack bar 112, so that it is possible to enhance a steering feeling.

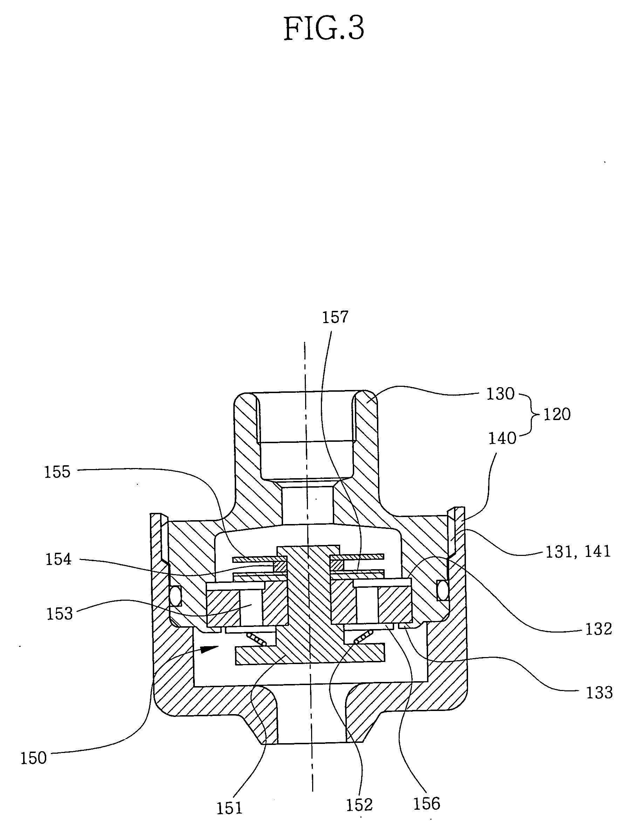

Figure 3 is a view illustrating the damping valve. An outer shape of the above damping valve is formed by the housing assembly 120 which is divided into the first and second housings 130 and 140. In particular, since a male thread 131 and a female thread 141 are formed in an outer surface of the first housing 130 and an inner surface of the second housing 140,respectively, the male and female threads 141 and 131 are engaged in a state that the first housing 130 is inserted into the second housing 140. In addition, a valve body 150 is installed in the interior of the first and second housings 130 and 140 for thereby directly controlling a flow of the oil pressure. In addition, a pin 151 is installed in the center portion of the valve body 150 in an upward and downward directions. The above pin 151 is elastically suspended by the spring 152 installed in an outer lower portion of the pin 151. A plurality of flow path holes 153 which pass through in an upward and downward directions are formed in an outer portion of the valve body 150. A retainer 154 and a washer 155 are installed in an upper outer portion of the pin 151. A disk 157 which is closely contacts with an upper portion of the valve body 150 by dint of the spring 152 which elastically suspends the pin 151 is installed in a lower portion of the washer 155. In addition, a valve 156 which closely contacts with a lower side of the valve body 150 by dint of the spring 152 is installed in a lower side of the pin 151. A part of each upper side and lower side of the valve body 150 which contacts with the disk 157 and the valve 156, respectively, always opens the flow path holes 153. The flow path holes 153 which are always opened between the disk 157 and the valve 156 are formed in different portions, so that a certain small amount of the fluid is always flown in the upward and downward directions of the valve body 150 through the flow path holes 153. Therefore, a certain oil pressure is stably transferred to the inner side of the valve.

In addition, the present invention is directed to improving a coupling structure of the housing assembly 120 and the valve body 150 of the damping valve for thereby implementing an easier fabrication and assembling operation. An installation jaw portion 132 into which the valve body 150 is inserted and mounted is formed in an inner surface of the first housing 130. A cocking portion 133 which supports an end portion of the valve body 150 is formed in an entrance portion of the installation jaw portion 132. In particular, the cocking portion 133 is extended toward the center of the valve body 150. After the valve body 150 is inserted into the installation jaw portion 132, the processing is performed toward the center side of the valve body 150, for thereby preventing an escape of the valve body in an axial direction.

The operation of the damping valve of the steering apparatus according to the present invention will be described as follows.

When a larger oil pressure is applied from the upper side to the lower side, the valve 156 which closes the flow path holes 153 of the lower side of the valve body 150 pushes the spring 152 for thereby opening the flow path holes 153. Therefore, the fluid flows through the flow path holes 153. Therefore, it is possible to implement a smooth operation of the oil pressure without a certain resistance.

On the contrary, when a large oil pressure is applied from the lower side to the upper side, the oil pressure may bend an outer side of the disk 157 of the upper side of the valve body 150. Therefore, since a varying amount of the disk 157 is restricted by the washer 155 installed in the upper side, the moving amount and moving speed of the fluid are decreased due to a large resistance and the opening of the narrow flow path holes 153 for thereby implementing a desired damping effect.

When assembling the damping valve, after the valve body 150 is installed in the interior of the first housing 130, the cocking portion 133 is formed through some processing. Therefore, the valve body 150 is fixed. In this state, the first and second housings 130 and 140 are threadedly engaged.

As described above, in the damping valve of the steering apparatus according to the present invention, since the installation jaw portion which needs an accurate process in order for the valve body to be inserted and fixed is provided in only the first housing, it is possible to implement an easier fabrication of the damping valve.

In addition, since the valve body is easily first installed in the interior of the first housing based on the cocking portion, when coupling the first and second housings, it is possible to overcome the problems that the position of the valve body is arranged. Therefore, it is possible to implement an easier assembling operation of the damping valve.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a damping valve of a steering apparatus which includes a housing assembly which is formed of a first housing and a second housing threadedly engaged with the first housing and is fixedly installed in one side of an oil pressure pipe, and a valve body which is installed in the interior of the housing assembly, said damping valve of a steering apparatus, comprising:
said first housing which includes an installation jaw portion in which the valve body is inserted and mounted, and a cocking portion which is adapted to fix the valve body inserted and mounted in the installation jaw portion.

2. The apparatus of claim 1, wherein said cocking portion is formed in an entrance portion of the installation jaw portion into which the valve body is inserted.
